# EUROPÄISCHE PATENTSCHRIFT

(11) **EP 0 635 654 B1**
(45) Veröffentlichungstag und Bekanntmachung des Hinweises auf die Patenterteilung: **22.01.1997**
(21) Anmeldenummer: 94110838.3
(22) Anmeldetag: 12.07.1994
(51) Int. Cl.: F16D 65/56

(54) **Nachstellvorrichtung für eine Scheibenbremse**
Adjusting device for a disc brake
Dispositif de rajustage pour un frein à disque

(30) Priorität: 12.07.1993 DE 4323292
(43) Veröffentlichungstag der Anmeldung: 25.01.1995
(73) Patentinhaber: PERROT BREMSEN GmbH, D-68229 Mannheim (DE)
(72) Erfinder: Macke, Wlodzimierz, D-68519 Viernheim (DE); Rupprecht, Bernd, D-68535 Edingen-Neckarhausen 2 (DE)
(74) Vertreter: Patentanwälte Leinweber & Zimmermann

(56) Entgegenhaltungen:
- EP-A- 0 478 917
- DE-B- 2 850 480
- US-A- 4 399 894

## Beschreibung

Die Erfindung betrifft eine Nachstellvorrichtung für eine Scheibenbremse, insbesondere eine Gleitsattelscheibenbremse, wie z.B. aus Dokument EP-A-478 917 bekannt.

Gewöhnlich weisen Nachstellvorrichtungen für Gleitsattelscheibenbremsen mindestens eine Nachstellwelle zum Drehen einer Druckspindel, die an einer Bremsbacke anliegt und in ein durch Drehen einer Zuspannwelle mit Druck in Richtung auf eine Bremsscheibe beaufschlagbares Druckstück eingeschraubt ist, und ein eine kraftabhängige Kupplung aufweisendes Nachstellgetriebe zwischen der Zuspannwelle und der Nachstellwelle auf.

Zum Ein- oder Ausbau der Bremsbeläge, aber auch aus anderen Gründen, wie etwa Reparatur, Austausch o. dgl. von Einzelelementen, wird die Bremse in ihre Ausgangsstellung gebracht. Dazu wird die Druckspindel im Sinne einer Entfernung von der Bremsscheibe in das Druckstück hineingeschraubt. Sie bewegt sich mithin in Richtung ihrer Längsachse weg von der Bremsscheibe. Dabei kann es vorkommen, daß die Druckspindel an dem Nachstellgetriebe der Nachstellvorrichtung anschlägt, wodurch das Nachstellgetriebe sich verkanten und verklemmen kann. Das verklemmte Getriebe kann aber bei einem darauffolgenden Bremsvorgang keine Nachstellfunktion ausführen.

Aufgabe der Erfindung ist es, eine Nachstellvorrichtung anzugeben, bei der ein Verkanten oder Verklemmen des Nachstellgetriebes beim Hereinschrauben der Druckspindel in das Druckstück zuverlässig vermieden ist.

Erfindungsgemäß wird die gestellte Aufgabe durch eine Nachstellvorrichtung für eine Scheibenbremse, insbesondere eine Gleitsattelscheibenbremse, mit mindestens einer Nachstellwelle zum Drehen einer Druckspindel, die an einer Bremsbacke anliegt und in ein durch Drehen einer Zuspannwelle mit Druck in Richtung auf eine Bremsscheibe beaufschlagbares Druckstück eingeschraubt ist, und mit einem eine kraftabhängige Kupplung aufweisenden Nachstellgetriebe zwischen der Zuspannwelle und der Nachstellwelle gelöst, wobei die kraftabhängige Kupplung auf der der Druckspindel zugewandten Seite des Nachstellgetriebes liegt, ein Teil der kraftabhängigen Kupplung drehfest und axial zumindest in Richtung weg von der Druckspindel unverschieblich an der Nachstellwelle festgelegt ist und das übrige Nachstellgetriebe gegen eine elastische Rückstellkraft axial in Richtung weg von der Druckspindel verschieblich ist.

Die vorstehend beschriebene Ausgestaltung der Nachstellvorrichtung gewährleistet, daß die Funktionsfähigkeit der Nachstellvorrichtung auch bei einem Anschlagen der Druckspindel an der Nachstellvorrichtung gewährleistet ist. Wegen der Anordnung der kraftabhängigen Kupplung auf der der Druckspindel zugewandten Seite des Nachstellgetriebes wird nämlich die Druckspindel bei einem übermäßigen Hineinschrauben in das Druckstück an der genannten Kupplung anschlagen. Sie schlägt dabei an demjenigen Teil der kraftabhängigen Kupplung an, der drehfest und axial zumindest in Richtung weg von der Druckspindel unverschieblich and der Nachstellwelle festgelegt ist. Mit anderen Worten schlägt sie an demjenigen Teil der Kupplung an, der sich beim Herausschrauben ohnehin zusammen mit der Druckspindel dreht, weshalb an dieser Stelle kein Verklemmen oder Verspannen auftreten kann. Auch dann, wenn die Druckspindel an dem drehfesten Teil der Kupplung anliegt, kann das Nachstellgetriebe beim nächsten Nachstellschritt gegen eine elastische Rückstellkraft axial in Richtung weg von der Druckspindel ausweichen, so daß auch an der der Druckspindel gegenüberliegenden Seite des Nachstellgetriebes keine Gefahr des Verspannens oder Verklemmens besteht.

Bei der kraftabhängigen Kupplung handelt es sich bevorzugt um ein Zahngesperre. Das Zahngesperre schnappt über, wenn zur Rückstellung der Bremse an der Druckspindel mit einem Moment gedreht wird, das das von der Federvorspannung ausgeübte Moment übersteigt. Dabei ist das übrige Getriebe mindestens um den für einen Zahnsprung erforderlichen Weg axial in Richtung weg von der Druckspindel verschieblich.

Alternativ zu der vorbeschriebenen Lösung kann die kraftabhängige Kupplung aber auch von einem federbelasteten Reibgesperre gebildet sein.

Bevorzugt ist das Nachstellgetriebe auf der bremsscheibenabgewandten Seite der Zuspannwelle angeordnet. Dadurch wird zum einen erreicht, daß das Nachstellgetriebe nicht innerhalb der Bremse liegt, was die Montage/Demontage aufwendig machen würde. Darüber hinaus liegt das Nachstellgetriebe dadurch aber auch nicht im Bereich des Kraftflusses der Zuspannung, wodurch eine hohe Lebensdauer der Einzelteile des Nachstellgetriebes sowie eine verläßliche Nachstellfunktion gewährleistet sind.

Erfindungsgemäß kann eine Einrichtung zum Aufrechterhalten eines Freiraums für die axiale Verschiebung des übrigen Nachstellgetriebes vorgesehen sein. Dies sollte insbesondere dann der Fall sein, wenn derjenige Bereich, in dem das übrige Nachstellgetriebe gegen die elastische Rückstellkraft ausweichen soll, nicht freiliegt, sondern beispielsweise von einem Deckel o. dgl. abgeschlossen ist.

Die Einrichtung zum Aufrechterhalten des Freiraums kann mindestens zwei Sicherungsringe beinhalten.

Alternativ kann die Einrichtung zum Aufrechterhalten des Freiraums aber auch eine Abstandshülse beinhalten.

Weiter ist es erfindungsgemäß bevorzugt, daß die Kopplung des Nachstellgetriebes mit der Zuspannwelle und/oder der Druckspindel das Lüftspiel der Bremse vorgibt.

Dabei kann die Kopplung eine Stift-Schlitz-Verbindung aufweisen, bei der der Stift mit dem Bremslüftspiel entsprechenden Spiel in den Schlitz eingreift.

Über die gennanten Vorteile hinaus hat die Anordnung des Nachstellgetriebes auf der bremsscheibenabgewandten Seite der Zuspannwelle noch den Vorteil, daß dadurch die gesamte Nachstellvorrichtung (abgesehen von der Druckspindel) vor dem eigentlichen Bremsenzusammenbau komplett an einem Teil des Bremssattels befestigt werden kann, um einerseits die Nachstellfunktion zu überprüfen und andererseits diesen Sattelteil an dem die Zuspannvorrichtung aufnehmenden weiteren Sattelgehäuse zu befestigen. Diese Eigenschaft ist gerade beim automatisierten Bremsenzusammenbau wünschenswert.

Zur weiteren Vereinfachung des Einbaus der erfindungsgemäßen Nachstellvorrichtung kann im Falle der Stift-Schlitz-Verbindung der Schlitz nach der bremsscheibenabgewandten Seite der Zuspannwelle hin öffnen. Damit kann die Stift-Schlitz-Verbindung durch einfaches Aufsetzen hergestellt werden.

Nachstehend ist die Erfindung anhand bevorzugter Ausführungsbeispiele unter Bezugnahme auf die beiliegende Zeichnung mit weiteren Einzelheiten näher erläutert. Dabei zeigen
- Fig. 1: einen Schnitt durch eine Gleitsattelscheibenbremse mit der erfindungsgemäßen Nachstellvorrichtung,
- Fig. 2: einen zu dem Schnitt nach Fig. 1 senkrechten Schnitt durch die Gleitsattelscheibenbremse,
- Fig. 3: die erfindungsgemäße Nachstellvorrichtung in vergrößerter Schnittdarstellung im Ausgangszustand und
- Fig. 4: die Schnittansicht nach Fig. 1, jedoch zum Zietpunkt des Zusammensetzens.

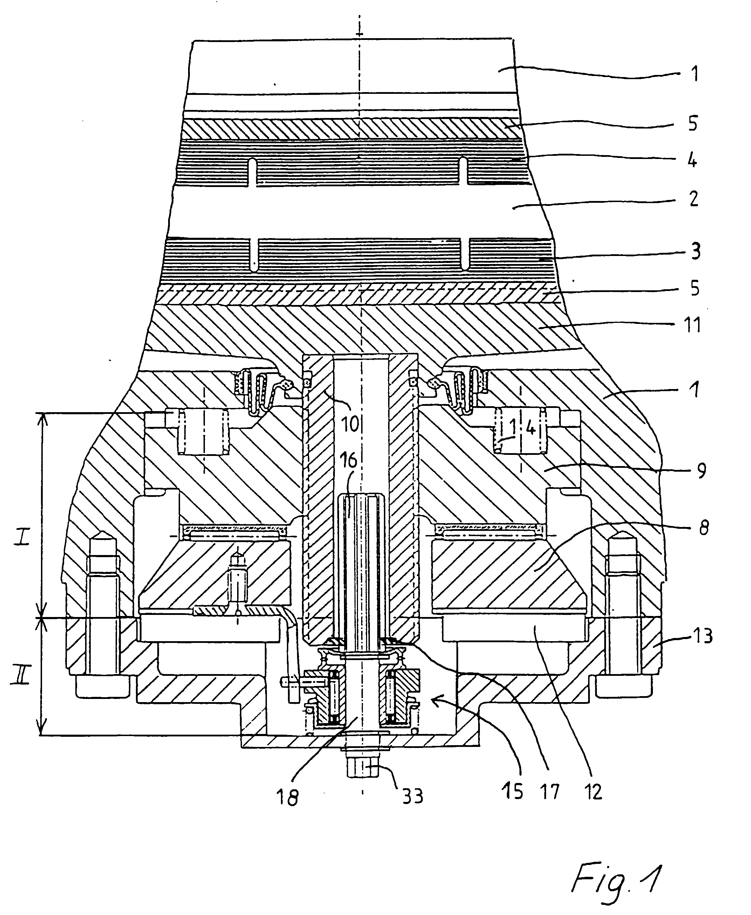

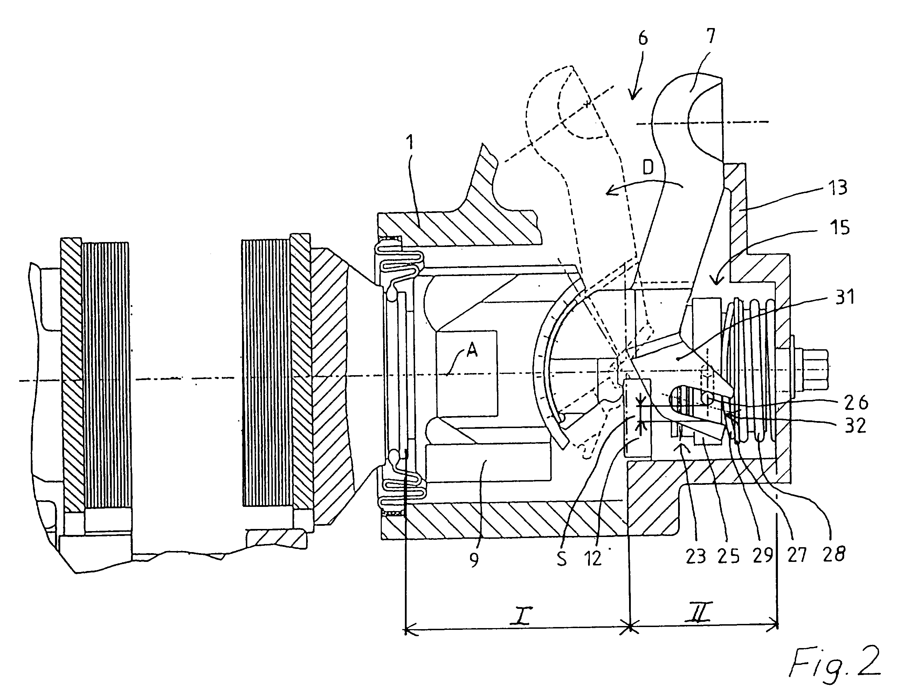

Nach den Fig. 1 und 2 weist die dort dargestellte Scheibenbremse einen Bremssattel 1 auf, der in üblicher Weise mit seinen beiden Schenkeln eine Bremsscheibe 2 übergreift. Beidseits der Bremsscheibe sind Bremsbeläge 3, 4 an Belagträgern 5 in einem nicht dargestellten Bremsenträger bzw. im Bremssattel 1 geführt und abgestützt. Der Bremssattel ist in nicht näher dargestellter Weise mit Hilfe von Führungsmitteln quer zur Bremsscheibe verschieblich gelagert. Der Bremssattel 1 weist einseiting eine Zuspannvorrichtung 6 zur Betätigung der Bremse auf.

Die Zuspannvorrichtung 6 besteht im wesentlichen aus einem Bremshebel 7, der mit einer parallel zur Bremsscheibenebene angeordneten Zuspannwelle 8 verbunden ist, und aus einem im Bremssattel 1 verschieblichen Druckstück 9, in das mittig in der Ebene der Bremsenachse A der Zuspannvorrichtung 6 eine Druckspindel 10 eingeschraubt ist. Zur Bremsscheibe 2 weisend ist die Druckspindel 10 mit einem sich am Belagträger 5 abstützenden Druckteil 11 gekoppelt.

Die Zuspannwelle 8 stützt sich an Stützplatten 12 innerhalb des Bremssattels ab. Der Bremssattel ist durch einen Deckel 13 verschlossen. Die Kontur der Abstützung der Zuspannwelle 8 an den Stützplatten 12 ist Gegenstand einer älteren, jedoch nachveröffentlichten Patentanmeldung. Die Zuspannvorrichtung 6 wird durch Druckfedern 14 in Richtung Stützplatten 12 verspannt. Das Druckstück 9 kann im Bremssattel geführt sein.

Durch diese Anordnung ist es möglich, den Innenraum des Bremssattels in zwei Bereiche I und II aufzuteilen. Dabei handelt es sich um einen Zuspannbereich I, der bremsscheibenzugewandt vor den Stützplatten 12 liegt und zur Aufnahme der Betätigung dient, sowie einen Freibereich II, der bremsscheibenabgewandt hiter den Stützplatten 12 liegt und frei von Zuspannkräften ist. Der Freibereich II dient lediglich zur Aufnahme eines Nachstellgetriebes 15 für die Druckspindel 10.

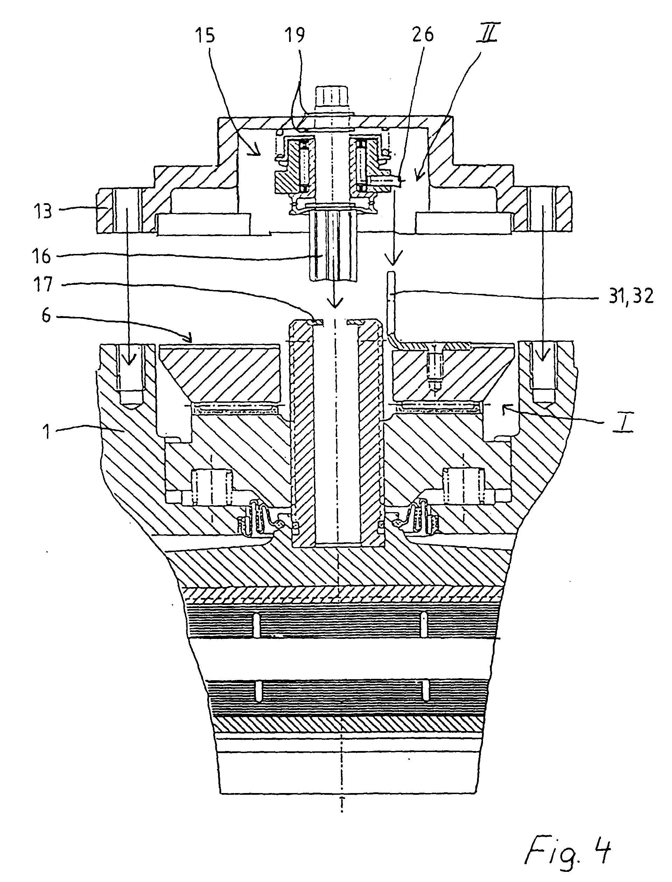

Wie insbesondere Fig. 4 zeigt, kann das gesamte Nachstellgetriebe 15, das anschließend detailliert beschrieben wird, bereits am Deckel 13 im Freibereich II vormontiert sein. Dadurch ist das Nachstellgetriebe 15 vor dem Einbau auf seine Funktion überprüfbar. Ferner kann es komplett mit dem Deckel 13 an dem Bremssattel 1 befestigt werden.

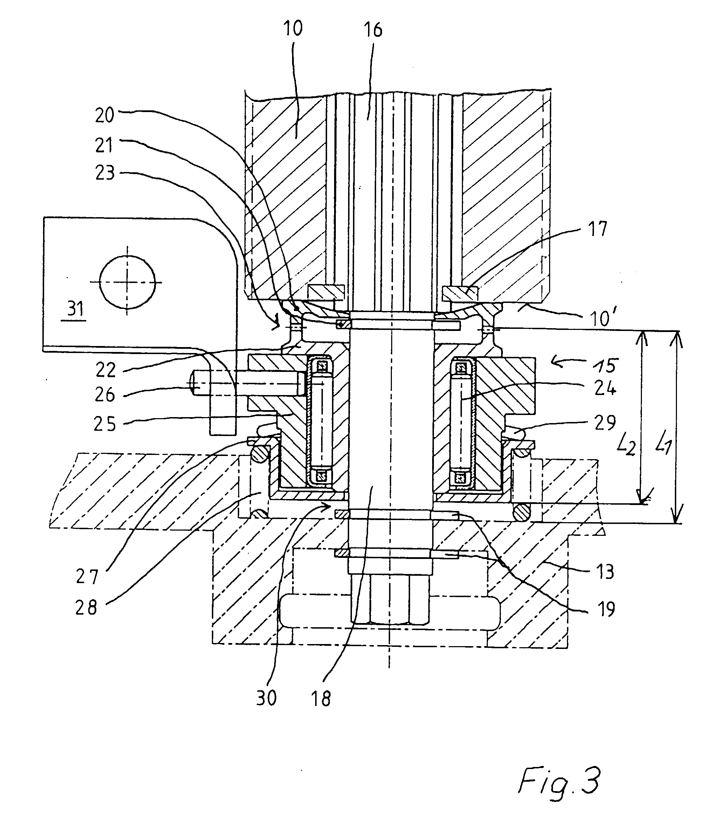

Das Nachstellgetriebe 15 weist gemäß Fig. 3 im einzelnen eine als Profilwelle ausgebildete Nachstellwelle 16 auf, die einerseits mittels Profilscheiben 17 drehbar, aber axial verschiebbar mit der Druckspindel 10 in Wirkeingriff steht, und andererseits einen zylindrischen Ansatz 18 aufweist.

Der Ansatz 18 ist in einer entsprechenden Öffnung des Deckels 13 mittels zweier Sicherungsringe 19 oder ähnlichem drehbar gehalten. Innerhalb der Bremse sind auf dem Ansatz 18 in raumsparender Anordnung die weiteren Nachstellteile übereinanderliegend - also "parallelgekoppelt" - angeordnet.

Auf dem Ansatz 18 ist mittels eines Sicherungsrings 21 ein Ring 20 mit einer Stirnverzahnung gehalten, wodurch der Ring 20 drehfest und axial nicht verschiebbar - also starr - mit der Profilwelle 16 verbunden ist. Der Abstand L₁ zwischen dem starr gehaltenen Ring 20 und dem Deckel 13 ist dabei größer als die axiale Baulänge L₂ der restlichen Teile des Nachstellgetriebes 15. Dadurch ist ein Freiraum 30 ausgebildet. Der Abstand L₁ kann auch durch eine Abstandshülse definiert sein. In diesem Fall können der Sicherungsring 21 und einer der Sicherungsringe 19 entfallen.

Auf dem Ansatz 18 ist eine Buchse 22 mit einer der Stirnverzahnung des Rings 20 gegenüberliegenden Stirnverzahnung angeordnet. Dadurch wird ein Zahngesperre 23 gebildet, das als kraftabhängige Kupplung dient. Das Zahngesperre 23 kann auch von einem Drehmoment übertragenden Reibgesperre gebildet sein. Die Buchse 22 ist mittels einer Einwegkupplung 24 (Hülsenfreilauf oder Schlingfeder o. dgl.) mit einer Hülse 25 gekoppelt, die wiederum einen Mitnahmestift 26 oder ähnliches aufweist.

An der Buchse 22 liegt axial ein Federteller 27 an. Zwischen dem Federteller 27 und dem Deckel 13 liegt eine Druckfeder 28. Da die axiale Länge der Buchse 22 größer als die axiale Länge der Hülse 25 ist, wirkt die Vorspannkraft der Feder 28 nicht verspannend auf die Hülse 25, sondern sie übt nur die erforderliche Vorspannkraft auf das Zahngesperre 23 aus. Ferner kann die Druckfeder 28 dadurch nur eine Haltekraft auf die Nachstellwelle 16, den Ring 20 und die Hülse 22 ausüben, wodurch beim Bremslösevorgang der vollzogene Nachstellweg nicht wieder zurückgestellt wird.

Damit sich das Grundlüftspiel S (Fig. 2) der Bremse im zuspannungsfreien Zustand nicht durch Bremsenerschütterungen verändert, ist zwischen dem Federteller 27 und der Hülse 25 ein Federring 29 oder ähnliches vorgesehen. Dadurch bleibt die Stellung der Hülse 25 auch bei Erschütterungen erhalten. Die Haltekraft des Federrings 29 ist kleiner als die Vorspannkraft der Druckfeder 28. Der Grund dafür ergibt sich aus der untenstehenden Funktionsbeschreibung.

Zwischen dem Federteller 27 und dem Deckel 13 ist der Freiraum 30 dadurch ausgebildet, daß der Abstand L₁ zwischen dem Ring 20 und dem Deckel 13 größer als die axiale Baulänge L₂ der restlichen Teile des Nachstellgetriebes 15 ist. Der Freiraum 30 ermöglicht ein axiales Ausweichen des Nachstellgetriebes 15 bei einem Zahnsprung in dem Zahngesperre 23.

Um eine Wirkverbindung zwischen der Zuspannvorrichtung 6 und dem Nachstellgetriebe 15 herzustellen, ist am Bremshebel 7 oder an der Zuspannwelle 8 ein auskragender Hebel 31 befestigt, der bei Bremsbetätigung mit der Zuspannvorrichtung 6 eine Schwenkbewegung vollzieht. Der Hebel 31 weist zum Deckel 13 zeigend einen offenen Schlitz 32 auf. In diesen Schlitz greift der Stift 26 zur Drehmitnahme des Nachstellgetriebes 15 ein.

Bei dem gezeigten Ausführungsbeispiel ist das Lüftspiel S der Bremse als Anschlagspiel zwischen dem Schlitz 32 und dem Stift 26 festgelegt. Es sind jedoch auch andere Ausgestaltungen zur Realisierung des Bremslüftspiels S denkbar. Dadurch, daß die Schlitzöffnung 32 zum Deckel 13 hin weist, ist es möglich, den Stift 26 darin einzuschieben und mit dem Hebel 31 zu koppeln, wenn der Deckel 13 mit dem Nachsteilgetriebe 15 komplett am Bremssattel 1 befestigt wird (vgl. Fig. 4).

### Funktion

Bei Betätigung der Zuspannvorrichtung 6 in Pfeilrichtung D (Fig. 2) schwenkt der Hebel 31 mit und greift nach Überwindung des Lüftspiels S infolge Belag- oder Scheibenverschleißes hinter den Mitnahmestift. Dabei wird die Hülse 25 mitgedreht, so daß über die Kopplung mittels der in Drehrichtung D sperrenden Einwegkupplung 24 die Drehmitnahme der Buchse 22 erfolgt. Diese Drehbewegung wird über das federvorgespannte Zahngesperre 23 auf den Ring 20 und die mit diesem verbundene Nachstellwelle 16 übertragen, so daß die Druckspindel 10 über die Profilscheibe 17 im Sinne einer Nachstellung aus dem Druckstück 9 herausgeschraubt wird.

Übersteigt bei der Belaganlage und der einsetzenden elastischen Bremsenverformung unter Fortsetzung der Zuspannbewegung in Richtung D die Gewindereibung zwischen dem Druckstück 9 und der Druckspindel 10 das Nachstellmoment, das durch das federbelastete Zahngesperre 23 übertragen werden kann, springen die Zähne über. Dabei bewegen sich alle Nachstellteile, außer dem unverschiebbaren Ring 20, axial gegen die Vorspannkraft der Druckfeder 28 in Richtung des Freiraums 30. Der unter Verspannung zurückgelegte Anteil des Zuspannweges wird somit beim Nachstellvorgang nicht berücksichtigt.

In Bremsenlöserichtung öffnet die Einwegkupplung 24, wobei bis zur andersseitigen Anlage zwischen dem Mitnahmestift 26 und dem Schlitz 32 die Druckfeder 28 mittels des zwischen der Buchse 22 und der Hülse 25 vorhandenen Axialspiels das erforderliche Haltemoment auf die Nachstellwelle 16, den Ring 20 und die Buchse 22 ausübt und der Hebel 31 über den Stift 26 lediglich die Hülse 25 in ihre Ausgangsstellung dreht. Alle anderen Teile der Nachstellvorrichtung bleiben somit außer Eingriff.

Damit sich die Hülse 25 bei gelöster Bremsung nicht infolge Schwingungen mit dem Stift 26 aus ihrer Ruhelage verändert, was zu einer Verfälschung des Grundlüftspiels S führen würde, wird über den Federring 29 oder ähnliches ein erforderliches Haltemoment auf die Hülse 25 ausgeübt. Wie bereits anfangs erwähnt, ist aus diesem Grunde die Kraft des Federrings 29 kleiner als diejenige der Druckfeder 28. Diese Bedingung muß auch beim Bremslösevorgang erfüllt sein, um eine unerwünschte Mitnahme der Nachstellwelle 16, des Rings 20 und der Buchse 22 zu vermeiden.

Beim Zurückstellen der Bremse beispielsweise für einen Belagwechsel wird die Nachstellwelle 16 mittels eines Werkzeugs an einem Schlüsselansatz 33 gedreht, wodurch die Druckspindel 10 in ihre Ausgangslage gebracht wird. Dabei dient der ortsfeste Ring 20 als "Stoppteil" für die Druckspindel, so daß ein Zusammendrücken der Nachstellteile gegen den zum Sattel gehörigen Deckel 13 vermieden wird. Sowohl die Leichtgängigkeit beim Nachstellschritt als auch die axiale Ausweichbewegung während des Auskuppelns in den Freiraum 30 sind somit beim anschließenden Brensvorgang gewährleistet.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste:

1 Bremssattel
2 Bremsscheibe
3, 4 Bremsbelag
5 Belagträger
6 Zuspannvorrichtung
7 Bremshebel
8 Zuspannwelle
9 Druckstück
10 Druckspindel
11 Druckteil
12 Stützplatte
13 Deckel
14 Druckfeder
15 Nachstellgetriebe
16 Nachstellwelle
17 Profilscheibe
18 Ansatz
19 Sicherungsringe
20 Ring
21 Sicherungsring
22 Buchse
23 Zahngesperre
24 Einwegkupplung
25 Hülse
26 Mitnahmestift
27 Federteller
28 Druckfeder
29 Federring
30 Freiraum
31 Hebel
32 Schlitz
33 Schlüsselansatz
I Zuspannbereich
II Freibereich
A Bremsenachse
D Zuspannrichtung
S Lüftspiel
L₁, L₂ Baulänge

## Patentansprüche

1. Nachstellvorrichtung für eine Scheibenbremse, insbesondere eine Gleitsattelscheibenbremse, mit mindestens einer Nachstellwelle (16) zum Drehen einer Druckspindel (10), die an einer Bremsbacke (3) anliegt und in ein durch Drehen einer Zuspannwelle (8) mit Druck in Richtung auf eine Bremsscheibe (2) beaufschlagbares Druckstück (9) eingeschraubt ist, und mit einem eine kraftabhängige Kupplung (23) aufweisenden Nachstellgetriebe (15) zwischen der Zuspannwelle (8) und der Nachstellwelle (16), wobei
- die kraftabhängige Kupplung (23) auf der der Druckspindel (10) zugewandten Seite des Nachstellgetriebes (15) liegt,
- ein Teil (20) der kraftabhängigen Kupplung (23) drehfest und axial zumindest in Richtung weg von der Druckspindel (10) unverschieblich an der Nachstellwelle (16) festgelegt ist und
- das übrige Nachstellgetriebe (15) gegen eine elastische Rückstellkraft in Richtung weg von der Druckspindel (10) verschieblich ist.

2. Nachstellvorrichtung nach Anspruch 1, dadurch gekennzeichnet, daß die kraftabhängige Kupplung (23) ein Zahngesperre ist und das übrige Nachstellgetriebe (15) mindestens um den für einen Zahnsprung erforderlichen Weg axial in Richtung eg von der Druckspindel (10) verschieblich ist.

3. Nachstellvorrichtung nach Anspruch 1, dadurch gekennzeichnet, daß die kraftabhängige Kupplung (23) ein federbelastetes Reibgesperre ist.

4. Nachstellvorrichtung nach einem der vorangehenden Ansprüche, dadurch gekennzeichnet, daß das Nachstellgetriebe (15) auf der bremsscheibenabgewandten Seite der Zuspannwelle (8) angeordnet ist.

5. Nachstellvorrichtung nach einem der vorangehenden Ansprüche, gekennzeichnet durch eine Einrichtung zum Aufrechterhalten eines Freiraums (30) für die axiale Verschiebung des übrigen Getriebes (15).

6. Nachstellvorrichtung nach Anspruch 5, dadurch gekennzeichnet, daß die Einrichtung zum Aufrechterhalten des Freiraums (30) mindestens zwei Sicherungsringe (19, 21) beinhaltet.

7. Nachstellvorrichtung nach Anspruch 5 oder 6, dadurch gekennzeichnet, daß die Einrichtung zum Aufrechterhalten des Freiraums (30) eine Abstandshülse beinhaltet.

8. Nachstellvorrichtung nach einem der vorangehenden Ansprüche, dadurch gekennzeichnet, daß die Kopplung des Nachstellgetriebes (15) mit der Zuspannwelle (8) und/oder der Druckspindel (10) das Lüftspiel (S) der Bremse vorgibt.

9. Nachstellvorrichtung nach Anspruch 3, dadurch gekennzeichnet, daß die Kopplung eine Stift-Schlitz-Verbindung aufweist, bei der der Stift (26) mit dem Bremslüftspiel entsprechendem Spiel (S) in den Schlitz (32) eingreift.

10. Nachstellvorrichtung nach Anspruch 9, dadurch gekennzeichnet, daß der Schlitz (32) nach der bremsscheibenabgewandten Seite der Zuspannwelle (8) hin öffnet.

## Claims

1. Adjustment device for a disc brake, specifically a floating caliper disc brake, with a minimum of one adjuster shaft (16) turning a pressure spindle (10) that abuts against a brake pad backing plate (3) and is screwed into a push rod (9) which is activated via clamping shaft (8) to travel towards the brake disc (2) equipped with a load dependent clutch (23) utilising an adjuster unit (1 5) between the clamping shaft (8) and adjuster shaft (16) whereby
- the load dependent clutch (23) is positioned on the pressure spindle (10) side of the adjuster unit (15)
- a part (20) of the load dependent clutch (23) is rigid and abuts axially in opposite direction of the pressure spindle (10) against the adjuster shaft (16) and
- the adjuster unit (15) is allowed to slide against an elastic retracting force in opposite direction of the pressure spindle (10).

2. Adjustment device according to claim 1, characterised by the load dependent clutch (23) consisting of a locking ratchet gear and the remaining adjuster mechanism (15) designed to slide in opposite direction of the pressure spindle (10) a specific distance at least equal to that of the space between one of the teeth of the ratchet gear.

3. Adjustment device according to claim 1, characterised by the load dependent clutch (23) being a spring loaded ratchet lock.

4. Adjustment device according to one of the above listed claims, characterised by the adjuster unit (15) being located on the brake disc side of the clamping shaft (8).

5. Adjustment device according to one of the above listed claims, characterised by the utilisation of a device to maintain free space (30) for the axial displacement of the adjuster unit (15).

6. Adjustment device according to claim 5, characterised by the free space maintaining device (30) utilising at least two retaining rings (19, 21).

7. Adjustment device according to claim 5 or 6, characterised by free space maintaining device (30) utilising a distance bushing.

8. Adjustment device according to one of the above listed claims, characterised by the clutch of the adjuster unit (15) together with the clamping shaft (8) and/or the pressure spindle (10) determining the air gap (S) of the brake.

9. Adjustment device according to claim 8, characterised by the clutch being equipped with a pin / groove joint, whereby, corresponding to the air gap (S) of the brake, the pin (26) interlocks with the groove (32).

10. Adjustment device according to claim 9, characterised by the groove (32) being open on the clamping shaft (8) opposite of the brake disc.

## Revendications

1. Dispositif de rajustage pour un frein à disque, en particulier un frein à disque à selle coulissante, avec au moins un arbre de rajustage (16) destiné à assurer la rotation d'une broche de pressage (10), appliquée sur une mâchoire de frein (3) et vissée dans une pièce de pressage (9), pouvant être sollicitée pour exercer une pression dans la direction d'un disque de frein (2) par une rotation d'un arbre de serrage (8), et avec un mécanisme de rajustage (15) présentant un embrayage (23) agissant en fonction de l'effort, entre l'arbre de serrage (8) et l'arbre de rajustage (16), où
- l'embrayage (23) agissant en fonction de l'effort est placé du côté du mécanisme de rajustage (15) tourné vers la broche de pressage (10),
- une partie (20) de l'embrayage (23) agissant en fonction de l'effort étant bloquée sur l'arbre de rajustage (16), assujettie en rotation et immobile axialement au moins dans la direction de l'écartement vis-à-vis de la broche de pressage (10), et
- le reste du mécanisme de rajustage (15) étant déplaçable à l'encontre d'une force de rappel élastique, dans la direction de l'écartement vis-à-vis de la broche de pressage (10).

2. Dispositif de rajustage selon la revendication 1, caractérisé en ce que l'embrayage (23) agissant en fonction de l'effort est un accouplement denté et le reste du mécanisme de rajustage (15) est déplaçable axialement dans la direction de l'écartement vis-à-vis de la broche de pressage (10), au moins de la course nécessaire au saut d'une dent.

3. Dispositif de rajustage selon la revendication 1 caractérisé en ce que l'embrayage (23) agissant en fonction de l'effort est un accouplement à friction chargé par un ressort.

4. Dispositif de rajustage selon l'une des revendications précédentes, caractérisé en ce que le mécanisme de rajustage (15) est disposé du côté de l'arbre de serrage (8) opposé au disque de frein.

5. Dispositif de rajustage selon l'une des revendications précédentes, caractérisé par un dispositif destiné à conserver un espace libre (30) destiné au déplacement axial du reste du mécanisme (15).

6. Dispositif de rajustage selon la revendication 5, caractérisé en ce que le dispositif de conservation de l'espace libre (30) contient au moins deux anneaux de sécurité (19, 21).

7. Dispositif de rajustage selon la revendication 5 ou 6, caractérisé en ce que le dispositif de conservation de l'espace libre (30) contient une douille d'écartement.

8. Dispositif de rajustage selon l'une des revendications précédentes, caractérisé en ce que l'accouplement du mécanisme de rajustage (15) prédétermine le jeu (S) du frein à l'aide de l'arbre de serrage (8) et/ou de la broche de pressage (10).

9. Dispositif de rajustage selon la revendication 8, caractérisé en ce que l'embrayage présente une liaison à goupille et à fente, pour laquelle la goupille (26) s'engage dans la fente (32) avec un jeu (S) correspondant au jeu du frein.

10. Dispositif de rajustage selon la revendication 9, caractérisé en ce que la fente (32) s'ouvre du côté de l'arbre de serrage (8) opposé au disque de frein.
